## Europäisches Patentamt

## European Patent Office

## Office européen des brevets

(19)

(11) Veröffentlichungsnummer: **0 158 982**
**B1**

(12)
# EUROPÄISCHE PATENTSCHRIFT

(45) Veröffentlichungstag der Patentschrift:
**12.07.89**

(51) Int. Cl.⁴: **F 17 C 13/12,** F 16 K 17/10

(21) Anmeldenummer: **85104436.2**

(22) Anmeldetag: **12.04.85**

(54) **Sicherheitsventil für Flüssiggastanks, insbesondere Schiffstanks.**

(30) Priorität: **14.04.84 DE 3414294**

(43) Veröffentlichungstag der Anmeldung:
**23.10.85 Patentblatt 85/43**

(45) Bekanntmachung des Hinweises auf die Patenterteilung:
**12.07.89 Patentblatt 89/28**

(84) Benannte Vertragsstaaten:
**BE DE FR GB NL**

(56) Entgegenhaltungen:
**DE-A-1 965 144**
**DE-A-2 731 804**
**FR-A-2 226 600**

**Prospekt über AGCO- Sicherheitsventile der Serie 95**

(73) Patentinhaber: **CRYOGAS Technik Ingenieursgesellschaft mbH, Postfach 51 06 47 Bonner Strasse 211, D-5000 Köln 51 (DE)**

(72) Erfinder: **Kober, Drago, Dipl.- Ing., Carl-Goerdelerstrasse 8, D-5020 Frechen- Bachem (DE)**
Erfinder: **Martin, Erich, Dipl.- Ing., Zeisigweg 41, D-5047 Wesseling (DE)**

(74) Vertreter: **Bauer, Wulf, Dr., Wolfgang- Müller-Strasse 12, D-5000 Köln 51 (Marienburg) (DE)**

## Beschreibung

Die Erfindung bezieht sich auf ein Sicherheitsventil eines Flüssiggastanks, insbesondere Schiffstanks, mit einem für den maximal zulässigen Tankdruck ausgelegten, plombierten Pilotventil mi vorgegebenem Einstelldruck und mit einem von dem Pilotventil gesteuerten Hauptventil, das einen tankseitigen Einlaß, der in einen Ventilsitz übergeht, einen seitlichen Auslaß, einen mit dem Pilotventil verbundenen Druckraum und ein Ventilteil, insbesondere einen Kolben aufweist, der

a. an der Einlaßseite von dem Gasdruck im Tank und auf der Seite des Druckraums über das Pilotventil mit einem dem Kolben gegen seinen Ventilsitz drückenden Anpreßdruck beaufschlagt wird und

b. bei Überschreiten des maximal zulässigen Tankdrucks außer Eingriff kommt und die Verbindung zwischen Einlaß und Auslaß freigibt.

Derartige Sicherheitsventile sind beispielsweise aus der DE-A-2 731 804 oder dem Prospekt über AGCO-Sicherheitsventile der Serie 95 bekannt. Bei diesen Sicherheitsventilen hat das Hauptventil einen Kolben mit O-Ring-Sitz. Der Tankdruck wird über das Pilotventil in den Druck- oder Domraum auf der Oberseite des Kolbens geführt. Die zum Einlaß des Hauptventils weisende untere Kolbenfläche wird direkt vom Tankdruck beaufschlagt. Letztere ist kleiner als die obere, so daß der Kolben nach unten gedrückt wird und das Ventil geschlossen ist. Steigt der Tankdruck und erreicht er den Einstelldruck des Pilotventils, so öffnet das Pilotventil und entlüftet den Druckraum oberhalb des Kolbens. Dadurch ist nun die von unten wirkende Kraft auf den Kolben größer, das Hauptventil öffnet. Fällt der Tankdruck bis zum Schließdruck des Pilotventils ab, so schließt das Pilotventil und der Tankdruck wirkt wieder auf die obere Kolbenfläche, wodurch das Hauptventil ebenfalls schließt.

Auf Grund der IMO-Bestimmungen A 328 (IX) Kapitel XV (XV.1) dürfen Flüssiggastanks von Gastankern nur soweit gefüllt werden, daß die Ladung beim Ansprechdruck des Sicherheitsventils nicht mehr als 98 % des geometrischen Tankvolumens einnimmt, auch wenn eine Rückverflüssigungsanlage bzw. eine Anlage zum Konstanthalten des Drucks vorgesehen ist. Bei Drucktankern, beispielsweise Volldruck- oder Semidrucktankern, kann demzufolge die maximal zulässige Füllrate nur dann erreicht werden, wenn bei Übernahme von tiefgekühltem Flüssiggas der Sättigungsdruck unmittelbar nach dem Laden denselben Wert hat wie der Ansprechdruck des Sicherheitsventils. Liegt der Sättigungsdruck unmittelbar nach dem Laden aber beispielsweise nur bei $10^5$ Pa (Butan, Dichte = 0,594), so wird die maximal mögliche Füllrate von 98 % nicht erreicht, denn der Tank darf nach IMO nur soweit gefüllt werden, daß er bei $5,5 \times 10^5$ Pa (Butan,

Dichte = 0,52) maximal, das heißt 98 % gefüllt wäre. Hierdurch wird ein Überfüllen des Tanks bei Erwärmung der Ladung etwa im Falle eines Feuers verhindert. Die Ausdehnung auf Grund von Wärmezufuhr im normalen Betrieb, insbesondere Wärmestrahlung oder Wärmeleitung, wird durch die erwähnte Rückverflüssigungsanlage vermieden. Die Einschränkung der Füllrate kann je nach Art des Flüssiggases einen Verlust an Füllrate bis zu 15 % bedeuten.

Bei dem vorbekannten Sicherheitsventil der Firma AGCO, Modell 95, ist zur Vermeidung dieses Nachteils ein sogenannter Hilfspilot vorgesehen. Dieser wird oben auf die primäre Druckeinstellung des Pilotventils aufgesetzt. Es können auch mehrere Hilfspiloten übereinander gesetzt werden. Der Hilfspilot enthält wie die primäre Druckeinstellung eine Schraubenfeder, deren Federkraft im wesentlichen den Einstelldruck des Pilotventils bestimmt. Auf diese Weise kann das Pilotventil durch Aufsetzen eines jeweils geeigneten Hilfspiloten an die physikalischen Parameter der Ladung angepaßt werden, wodurch das Sicherheitsventil dann bei höheren Drucken anspricht. Diese Lösung mit Hilfspilot hat jedoch den Nachteil, unhandlich zu sein. Auf Grund seiner druckbestimmenden Schraubenfeder ist ein Hilfspilot jeweils nur für einen sehr engen Druckbereich geeignet, demzufolge muß eine abgestufte Reihe von Hilfspiloten vorrätig sein, um die möglichen Einstelldrucke zwischen einem bar und dem zugelassenen Maximaldruck des Tanks abdecken zu können. Bei Übernahme einer Ladung müssen die Hilfspiloten der einzelnen Tanks im Normalfall ausgewechselt werden, die neu einzusetzenden Hilfspiloten müssen dem Sättigungsdruck des übernommenen Flüssiggases entsprechend ausgewählt werden. Dabei sind Montagearbeiten notwendig, der Hilfspilot ist über mehrere Schrauben mit der primären Druckeinstellung des Pilotventils verbunden. Beim Auswechseln von Hilfspiloten können schließlich Fehler auftreten, wenn ein Hilfspilot mit falschem Druckwert irrtümlich, insbesondere auf Grund eines Lesefehlers, eingesetzt wird, oder kleinere Materieteilchen, insbesondere Schmutz, in die primäre Druckeinstellung fallen.

Aus der DE-A-1 965 144 ist ein Sicherheitsventil bekannt, bei dem zwei untereinander verbundene Pilotventile ein Hauptventil steuern. Eines der beiden Pilotventile ist dabei auf den maximal zulässigen Tanküberdruck eingestellt, das andere auf den maximal zulässigen Tankunterdruck. Eine Anpassung der Pilotventile an die physikalischen Parameter der Ladung findet nicht statt.

Ausgehend von dem Sicherheitsventil der Firma Agco, Modell 95, ist es Aufgabe der Erfindung, die Nachteile dieses bekannten Sicherheitsventils zu vermeiden und dahingehend weiterzubilden, daß eine bequeme Einstellung hinsichtlich der Anpassung an die physikalischen Parameter der Ladung möglich ist, ohne daß von den Normvorschriften abgewichen werden muß.

Ausgehend von dem bekannten Sicherheitsventil der eingangs genannten Art wird diese Aufgabe dadurch gelöst,

- daß ein zweites Pilotventil vorgesehen ist, das parallel zum ersten Pilotventil geschaltet ist,
- daß das zweite Pilotventil eine manuell betätigbare, kontinuierlich verstellbare Einstellvorrichtung für den Einstelldruck aufweist,
- daß die Einstellvorrichtung des zweiten Pilotventils zwischen dem Normaldruck (Atmosphärendruck) und dem Einstelldruck des ersten Pilotventils verstellbar ist,
- daß das zweite Pilotventil eingestellt ist auf den Sättigungsdruck des im Flüssiggastank befindlichen Gases, und
- daß die Einstellvorrichtung ohne Hilfsenergie arbeitet und lediglich den Tankdruck nutzt.

Bei diesem Sicherheitsventil wird im Gegensatz zum vorbekannten Sicherheitsventil das für den maximal zulässigen Tankdruck ausgelegte erste Pilotventil nicht verändert, wodurch auch die Gefahr ausgeschaltet ist, daß bei der Montage von Hilfspiloten Fehler am ersten Pilotventil verursacht werden. Durch das zweite, parallelgeschaltete Pilotventil, das vorzugsweise im gesammten Druckbereich zwischen Atmosphärendruck und dem maximal zulässigen Druck des Tanks kontinuierlich einstellbar ist, entfällt die Notwendigkeit einer Aufbewahrung, Kontrolle und Handhabung vieler, abgestufter Hilfspiloten. Zugleich kann stets der jeweils optimale Druckwert am zweiten Pilotventil eingestellt werden, bei der vorbekannten Lösung ist man dagegen auf die jeweils vorhandenen Hilfspiloten angewiesen. Deren Einstelldruck fällt nicht notwendig mit dem optimalen Einstelldruck für das geladene Flüssiggas zusammen.

Anstelle einer Ausbildung als Kolben kann das Ventilteil auch als Membran oder Faltenbalg ausgeführt sein. Die manuell betätigbare, kontinuierlich verstellbare Einstellvorrichtung arbeitet ohne Hilfsenergie und nutzt lediglich den Tankdruck. Die Einstellvorrichtung kann direkt auf das Ventilelement des zweiten Pilotventils wirken, dieses zweite Pilotventil kann aber andererseits auch aus einer Druckmeß- und Schaltvorrichtung und einem von dieser gesteuerten Ventil aufgebaut sein.

In bevorzugter Weiterbildung hat das zweite Pilotventil ein Manometer, das den jeweiligen Tankdruck anzeigt und zudem bei einem einstellbaren Druckwert einen Schaltvorgang auslöst. Hierdurch werden Ablesefehler zusätzlich vermindert und Übertragungs- sowie Einstellfehler weitgehend unterdrückt. An dem Manometer kann nach Abschluß des Ladevorgangs der Sättigungsdruck des geladenen Flussiggases abgelesen werden, an der einstellbaren Druckschaltvorrichtung des Manometers kann der Einstelldruck des zweiten Pilotventils eingestellt werden, ohne daß die Gefahr besteht, daß dieser Einstelldruck unterhalb des Sättigungsdrucks der übernommnen Ladung liegt.

In einer anderen, bevorzugten Weiterbildung ist das zweite Pilotventil in Reihe mit einem bei einer erhöhten Temperatur selbsttätig öffnenden Ventil geschaltet. Hierdurch kann das zweite Pilotventil erst dann das Hauptventil steuern, wenn das vorzugswee mit einer Schmelzsicherung ausgestattete Ventil nach Zerstörung der Schmelzsicherung öffnet. Im Normalbetrieb, bei intakter Schmelzsicherung, hat das zweite Pilotventil keinen Einfluß auf das Hauptventil.

Hierdurch wird entsprechend der IMO-Bestimmungen, § 8.3 eine Möglichkeit, den oben beschriebenen Verlust an Laderate auszuschalten, realisiert. Nach diesen Bestimmungen muß neben einer Rückverflüssigungsanlage auch ein Sicherheitsventil vorgesehen werden, das im Falle von Feuer aktiviert wird und bei einem niedrigeren Druck im Vergleich zu demjenigen des normalen Sicherheitsventils anspricht.

Weitere Vorteile und Merkmale der Erfindung ergeben sich aus den übrigen Ansprüchen sowie der nun folgenden Beschreibung von nicht einschränkend zu verstehenden Ausführungsbeispielen, die im folgenden unter Bezugnahme auf die Zeichnung näher erläutert werden. In der Zeichnung zeigen:

Fig. 1 eine schematische Darstellung eines Sicherheitsventils mit einem Hauptventil und zwei parallelgeschalteten Pilotventilen,

Fig. 2 eine Darstellung ähnlich Figur 1, jedoch mit einem Zusatzventil, das bei Druchbruch einer Schmelzsicherung öffnet und mit dem zweiten Pilotventil in Reihe geschaltet ist.

Das Sicherheitsventil für Flüssiggastanks besteht im wesentlichen aus einem Hauptventil 20, einem ersten, verplombten Pilotventil 22 und einem zweiten, kontinuierlich einstellbaren Pilotventil 24, die parallelgeschaltet sind und beide unabhängig voneinander das Hauptventil 20 steuern. In bekannter Weise hat das Hauptventil 20 einen tankseitigen Einlaß 26, der nach oben hin in einen Ventilsitz 28 übergeht. Diesem ist ein als Kolben 30 ausgebildeter Ventilteil zugeordnet. Dieser Kolben 30 wird demzufolge von unten mit dem im Einlaß 26 herrschenden Tankdruck beaufschlagt. Das Hauptventil 20 hat weiterhin einen seitlichen Auslaß 32, der mit dem Einlaß 26 kommuniziert, wenn der Kolben 30 von seinem Ventilsitz 28 abgehoben ist. Oberhalb des Kolbens 30 befindet sich ein Druckraum 34, auch Domraum genannt, der über eine Steuerleitung 36 mit den beiden Pilotventilen 22, 24 verbunden ist.

Über eine Impulsleitung 38, in der hintereinander zunächst ein Rückschlagventil 40 und dann eine Blende 42 angeordnet sind, werden der Druckraum 34 und damit die obere Fläche des Kolbens 30 mit dem am Einlaß 26 herrschenden Tankdruck beaufschlagt. Da die obere Kolbenfläche größer ist als die effektive, dem Einlaß 26 zugewandte untere Kolbenfläche ist das Hauptventil 20 normalerweise geschlossen.

Das Hauptventil 20 öffnet dann, wenn der Druckraum 34 stärker entlüftet wird, als über die Blende 42 Gas direkt vom Einlaß 26 nachströmen kann. Diese Verbindung des Druckraums 34 mit der Außenatmosphäre erfolgt über mindestens eines der beiden, im Normalfall geschlossenen Pilotventile 22, 24.

Die Pilotventile 22, 24 sind in den Figuren schematisch dargestellt, um ihre Funktion anschaulicher erklären zu können. Der tatsächliche Aufbau ergibt sich beispielsweise aus dem oben genannten Prospekt des AGCO-Sicherheitsventils Serie 95. Das in den Figuren jeweils links dargestellte erste Pilotventil 22 hat einen nach unten weisenden Einlaß 44, der in einen Ventilsitz übergeht. An diesem liegt im Normalfall ein stempelförmiger Ventilteil 46 dichtend an. Ein Auslaß 48 ist über eine Leitung mit dem Auslaß 32 verbunden. Einlaß 44 und Auslaß 48 münden in einen unteren Druckraum, der nach oben durch eine erste Membran 50 abgeschlossen ist. Oberhalb dieser ersten Membran befindet sich ein oberer Druckraum des Pilotventils 22, der durch eine größere, zweite Membran 52 nach oben begrenzt ist und über eine Leitung 54, die zwischen Rückschlagventil 40 und Blende 42 in die Impulsleitung 38 einmündet, mit Gas unter Tankdruck beaufschlagt ist. Das Ventilteil 46 ist mit beiden Membranen 50, 52 verbunden und wird an seinem oberen Ende durch eine Druckfeder 56 belastet. Diese ist auf einen bestimmten Einstelldruck mittels einer gezeigten Justiereinrichtung 58 eingestellt und über eine Plombe 60 versiegelt.

In den beiden Druckräumen des ersten Pilotventils 22 herrscht normalerweise Tankdruck. Reicht dieser Tankdruck aus, um die Druckfeder 56 zu komprimieren, so kann sich der Ventilteil 46 von seinem Sitz entfernen, hierdurch wird der untere Druckraum des Pilotventils 22 und damit der Druckraum 34 des Hauptventils 20 praktisch druckfrei, da die durch die Blende 42 direkt aus dem Tank nachströmende Gasmenge nicht zum Aufbau eines Drucks ausreicht. Bei Abfallen des Druckes im Druckraum 34 wird der Kolben 30 nach oben bewegt, so daß der Weg vom Einlaß 26 zum Auslaß 32 frei ist. Das erste Pilotventil 22 schließt wieder, wenn der Tankdruck nicht mehr ausreicht, die Druckfeder 56 zu komprimieren. Dann kann sich wieder Druck im Druckraum 34 aufbauen, das Hauptventil schließt.

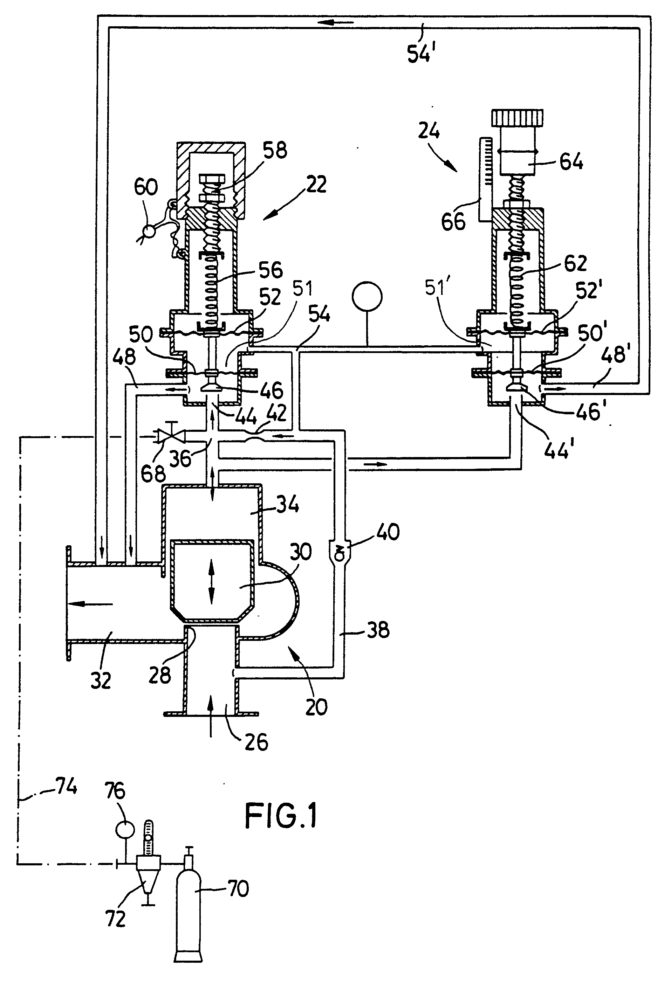

Im Ausführungsbeispiel nach Figur 1 ist zum Zwecke einer besonders einfachen Erläuterung der Erfindung das zweite Pilotventil 24 soweit wie möglich übereinstimmend mit dem ersten Pilotventil 22 ausgebildet. Entsprechende Bezugsziffern sind mit einem Strich versehen. So sind die beiden Einlässe 44, 44', die beiden Auslässe 48, 48' und die beiden oberen Druckräume 51, 51' über Leitungen miteinander verbunden. Anstelle der fest eingestellten, verplombten Druckfeder 56 ist jedoch eine schwächere Schraubenfeder 62 vorgesehen, die über eine manuell betätigbare Einstellvorrichtung 64 mit Skala 68 verstellt werden kann. Dadurch läßt sich der Einstelldruck des zweiten Pilotventils 24 durch Eindrehen der als Stellschraube mit Handgriff ausgebildeten Einstellvorrichtung 64 zwischen Normaldruck und, bei maximalem Eindrehen, dem Einstelldruck des ersten Pilotventils 22 einstellen. Der eingestellte Druck ist an der Skala 66 ablesbar.

In den Figuren ist jeweils noch eine Test- und Einstelleinrichtung gezeigt. Hierzu wird in die Steuerleitung 36 über ein Ventil 68 Stickstoff aus einer Stickstoffflasche 70 eingespeist. Das aus der Stickstoffflasche 70 strömende Gas durchläuft zunächst ein Druck-Reduzierventil mit Durchflußmesser 72, bevor es über eine Leitung 74 zum Ventil 68 strömt. Über ein Manometer 76 kann der in der Leitung 74 herrschende Druck abgelesen werden.

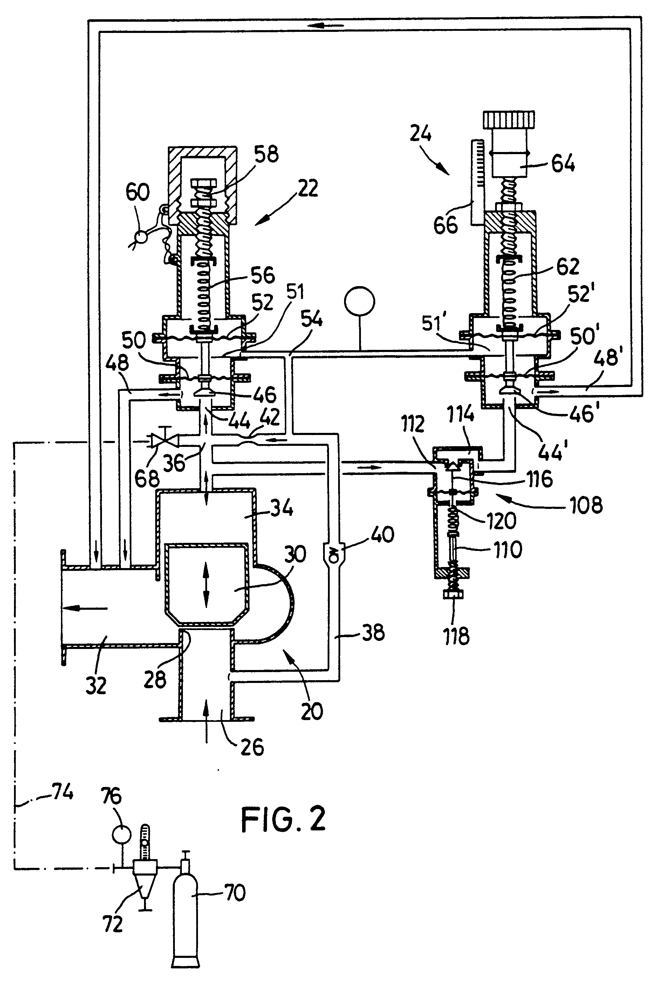

Das Ausführungsbeispiel nach Figur 2 schließlich entspricht weitgehend dem Ausführungsbeispiel nach Figur 1, jedoch mit der Ausnahme, daß in den zum zweiten Pilotventil 24 führenden Teil der Steuerleitung 36 ein Zusatzventil 108 eingefügt ist, das unter der Wirkung einer Schmelzsicherung 110 normalerweise geschlossen ist. Auf Grund dieser Reihenschaltung kann sich der Druck in der Steuerleitung 36 nur dann über das zweite Pilotventil 24 entspannen, wenn die Schmelzsicherung 110 durch Feuer oder andere hohe Temperaturen zerstört ist, wodurch das Zusatzventil 108 geöffnet ist und den Weg zum Einlaß 44' des zweiten Pilotventils 24 freigibt. Bei zerstörter Schmelzsicherung liegen die Verhältnisse vor, wie sie unter Bezugnahme auf Figur 1 erläutert wurden, bei durchgeschmolzener Schmelzsicherung 110 entspricht die Schaltung nach Figur 2 exakt der Schaltung nach Figur 1.

Das Zusatzventil 108 kann auch hinter das zweite Pilotventil 24, also zwischen dessen Auslaß 48' und dem Auslaß 32 eingeschaltet sein. Weiterhin kann das Zusatzventil 108 in den zum Steuerventil 96 führenden Teil der Steuerleitung 36 im Ausführungsbeispiel nach Figur 2 eingefügt werden.

Das Zusatzventil 108 mit der Schmelzsicherung 110 ist in an sich bekannter Weise aufgebaut: Der Weg von einem Einlaß 112 zu einem Auslaß 114 ist im Normalfall durch ein Ventilteil 116 versperrt, das über die Schmelzsicherung 110 mechanisch gegen seinen Ventilsitz gepreßt wird. Der Anpreßdruck wird über eine Schraube soweit vorgegeben, daß das Zusatzventil 108 normalerweise geschlossen ist. Die Schmelzsicherung 110 überträgt damit den Stelldruck der Schraube 118 auf den Ventilteil 116. Die Schmelzsicherung 110 ist ein Stab aus einem Material, das beispielsweise einen Schmelzpunkt zwischen 89 und 104 Grad Celsius hat. Bei Ausbruch von Feuer schmilzt dieses Material, so daß die mechanisch starre Verbindung zwischen der Schraube 118 und dem Ventilteil 116 entfällt. Eine Feder 120 zieht dann den Ventilteil 116 in die Freigabestellung, wodurch das Zusatzventil 108 geöffnet ist.

Andere Ausführungen des Zusatzventils, beispielsweise die Ausführung gemäß DE-A-2 731 804, sind ebenfalls möglich. Anstelle der Schmelzsicherung 110 können auch andere auslösbare Einrichtungen verwendet werden, die durch Temperatureinwirkung, Fernsteuerung oder Handbedienung auslösbar und gegebenenfalls zusätzlich zur Schmelzsicherung 110 vorgegeben sind.

Durch das Zusatzventil 108 wird bei dem Sicherheitsventil mit zwei Pilotventilen erreicht, daß bei kurzzeitigem Druckanstieg kein Gas abgeblasen wird. Derartige Druckanstiege können beispielsweise beim Ladevorgang oder beim Fahren in schwerer See auftreten. Bei den Sicherheitsventilen nach den Figuren 1 und 2 öffnet das Hauptventil 20 immer dann, wenn das zweite Pilotventil 24 öffnet. Dadurch aber strömt Gas ins Freie, dies ist zumindest im Hafen nicht zulässig und bedeutet darüberhinaus einen Ladungsverlust. Durch das Zusatzventil 108 wird das zweite Pilotventil 24 nun im Normalfall außer Kraft gesetzt, das zweite Pilotventil 24 kommt erst im Falle eines Feuerausbruchs zur Wirkung.

## Patentansprüche

1. Sicherheitsventil eines Flüssiggastanks, insbesondere Schiffstanks, mit einem für den maximal zulässigen Tankdruck ausgelegten, plombierten Pilotventil (22) mit vorgegebenem Einstelldruck und mit einem von dem Pilotventil (22) gesteuerten Hauptventil (20), das einen tankseitigen Einlaß (26), der in einen Ventilsitz (28) übergeht, einen seitlichen Auslaß (32), einen mit dem Pilotventil (22) verbundenen Druckraum (34) und ein Ventilteil, insbesondere einen Kolben (30) aufweist, der

a. an der Einlaßseite von dem Gasdruck im Tank und auf der Seite des Druckraums (34) über das Pilotventil (22) mit einem dem Kolben (30) gegen seinen Ventilsitz (28) drückenden Anpreßdruck beaufschlagt wird und

b. bei Überschreiten des maximal zulässigen Tankdrucks außer Eingriff kommt und die Verbindung zwischen Einlaß (26) und Auslaß (32) freigibt,

dadurch gekennzeichnet,

- daß ein zweites Pilotventil (24) vorgesehen ist, das parallel zum ersten Pilotventil (22) geschaltet ist,

- daß das zweite Pilotventil (24) eine manuell betätigbare, kontinuierlich verstellbare Einstellvorrichtung (64) für den Einstelldruck aufweist,

- daß die Einstellvorrichtung des zweiten Pilotventils (24) zwischen dem Normaldruck (Atmosphärendruck) und dem Einstelldruck des ersten, verplombten Pilotventils (22) verstellbar ist,

- daß das zweite Pilotventil (24) eingestellt ist auf den Sättigungsdruck des im Flüssiggastank befindlichen Gases, und

- daß die Einstellvorrichtung (64) ohne Hilfsenergie arbeitet und lediglich den Tankdruck nutzt.

2. Sicherheitsventil nach Anspruch 1, dadurch gekennzeichnet, daß seriell mit dem zweiten Pilotventil (24) ein Zusatzventil (108) angeordnet ist, das eine Schmelzsicherung (110) aufweist, normalerweise geschlossen ist und bei Zerstörung der Schmelzsicherung (11) selbsttätig öffnet.

3. Sicherheitsventil nach Anspruch 1 oder 2, dadurch gekennzeichnet, daß das zweite Pilotventil (24) eine Druckskala mit Zeiger (80) aufweist.

4. Sicherheitsventil nach Anspruch 1, dadurch gekennzeichnet, daß die beiden Einlässe (44, 44'), die beiden Auslässe (48, 48') und die beiden oberen Druckräume (51, 51') der beiden Pilotventile (22, 24) über Leitungen miteinander verbunden sind.

## Revendications

1. Vanne de sécurité pour réservoir de gaz liquéfiés, en particulier un réservoir de navire, avec une vanne pilote plombée (22) à pression de réglage prédéterminée, tarée pour la pression maximale admissible de réservoir, et avec une vanne principale (20) commandée par la vanne pilote (22), qui présente une entrée (26) du côté réservoir qui est mise en communication avec un siège de vanne (28), une sortie latérale (32), une chambre de pression (34) reliée à la vanne pilote (22) et une partie de vanne, en particulier un piston (30), qui

a. est soumise sur le côté d'entrée à la pression de gaz du réservoir et sur le côté de la chambre de pression (34) à travers la vanne pilote (22) à une pression d'appui qui pousse le piston (30) contre son siège de vanne (28) et

b. en cas de dépassement de la pression maximale admissible du reservoir cesse d'intervenir et libère la liaison entre l'entrée (26) et la sortie (32).

caractérisée

- en ce qu'est prévue une deuxième vanne pilote (24), qui est montée en parallèle à la première vanne pilote (22),

- en ce que la deuxième vanne pilote (24) présente pour la pression de réglage un dispositif de réglage (64) actionnable manuellement, ajustable de façon continue,

- en ce que le dispositif de réglage de la deuxième vanne pilote (24) est ajustable entre la pression normale (pression atmosphérique) et la pression de réglage de la première vanne pilote plombée (22),

- en ce que la deuxième vanne pilote (24) est réglée sur la pression de saturation du gaz se trouvant dans le réservoir de gaz liquéfié, et

- en ce que le dispositif de réglage (64) fonctionne sans énergie auxiliaire et utilise simplement la pression de réservoir.

2. Vanne de sécurité selon la revendication 1, caractérisée en ce qu'en série avec la deuxième vanne pilote (24) est placée une vanne additionnelle (108), qui présente un fusible (110), est normalement fermée et s'ouvre automatiquement en cas de destruction du fusible (110).

3. Vanne de sécurité selon la revendication 1 ou 2, caractérisée en ce que la deuxième vanne pilote (24) présente une échelle de pression avec indicateur (80).

4. Vanne de sécurité selon la revendication 1, caractérisée en ce que les deux entrées (44, 44'), les deux sorties (48, 48') et les deux chambres supérieurs de pression (51, 51') des deux vannes pilotes (22, 24) sont reliés les unes aux autres par des conduits.

**Claims**

1. Security valve for liguified-gas tanks, particularly for ship tanks, comprising a pilot valve (22) which is designed for the maximal allowable tank pressure, and is set and sealed for operation at a predetemined pressure, and a main valve (20) operated by this pilot valve (22) having an inlet (26) at the tank's side which is followed by a valve seat (28), a lateral outlet (32), a pressure space connected to the pilot valve (22), and a valve body especially a piston (30) which

a. is subjected to the gas pressure in the tank at the inlet side and towards the pressure space (34) via the pilot valve (22) to a closing pressure urging the piston (30) towards its valve seat (29) and

b. is lifted from its valve seat (28) and opens the connection between inlet and outlet, if the admissible maximum pressure in the tank is exceeded.

characterized by the fact, that

- a second pilot valve (24) is provided which is connected in parallel to the first pilot valve (22),

- the second pilot valve (24) has a continuously-adjustable manually-variable setting device (64) for the set pressure

- the setting device of the second pilot valve (24) is adjustable for operation between atmospheric pressure and the set pressure of the first sealed pilot valve (22),

- the second pilot valve is set according to the saturation pressure of a liquified gas being loaded in the tank, and

- the setting device operates responsive to the tank pressure, without requiring auxiliary energy.

2. Security valve according to claim 1, characterized by the fact that the second pilot valve (24) is connected in series with an additional valve (108) having a safety fuse (110) which additional valve (108) is normally disconnected, and opens automatically after destruction of the safety fuse (110).

3. Security valve according to claim 1 or 2, characterized by the fact that the second pilot valve (24) has an indicator scale with pointer.

4. Security valve according to claim 1 characterized by the fact that both inlets (44, 44'), both outlets (48, 48') and both upper pressure spaces (51, 51') are connected to each other by flow lines.

FIG.1

FIG. 2